# EUROPÄISCHE PATENTSCHRIFT

(11) **EP 2 268 937 B1**
(45) Veröffentlichungstag und Bekanntmachung des Hinweises auf die Patenterteilung: **21.06.2017**
(21) Anmeldenummer: 09732634.2
(22) Anmeldetag: 19.02.2009
(51) Int. Cl.: F16D 48/06

(54) **STEUER/REGELVORRICHTUNG FÜR EINEN FAHRZEUGANTRIEB, FAHRZEUGANTRIEB UND VERFAHREN ZUR REGELUNG/STEUERUNG EINES FAHRZEUGANTRIEBS**
OPEN-LOOP/CLOSED-LOOP CONTROL DEVICE FOR A VEHICLE DRIVE, VEHICLE DRIVE AND METHOD FOR PERFORMING CLOSED-LOOP/OPEN-LOOP CONTROL OF A VEHICLE DRIVE
DISPOSITIF DE COMMANDE/RÉGULATION POUR UN GROUPE PROPULSEUR DE VÉHICULE, GROUPE PROPULSEUR DE VÉHICULE ET PROCÉDÉ DE COMMANDE/RÉGULATION D UN GROUPE PROPULSEUR DE VÉHICULE

(30) Priorität: 14.04.2008 DE 102008001140
(43) Veröffentlichungstag der Anmeldung: 05.01.2011
(73) Patentinhaber: Robert Bosch GmbH, 70442 Stuttgart (DE)
(72) Erfinder: SEEL, Andreas, 71282 Hemmingen (DE)
(86) Internationale Anmeldenummer: PCT/EP2009/051954
(87) Internationale Veröffentlichungsnummer: WO 2009/127459

(56) Entgegenhaltungen:
- WO-A1-2004/028848
- DE-A1- 10 221 835
- DE-A1- 19 915 207
- DE-A1-102004 019 301
- DE-A1-102007 050 987
- ZEITZ M.: "Vorsteuerung ? Nichts ist so praktisch wie eine gute Theorie" PLT - SOMMERKOLLOQUIUM, RWTH AACHEN 2006, [Online] 2006, Seiten 1-23, XP002528264 Gefunden im Internet: URL:http://www.plt.rwth-aachen.de/fileadmi n/plt/Aktuelles/Sommerkolloquium06/zeitz.p df> [gefunden am 2009-05-15]

## Beschreibung

Die Erfindung betrifft eine Steuer/Regelvorrichtung für einen Fahrzeugantrieb, insbesondere einen Hybridantrieb, gemäß dem Oberbegriff des Anspruchs 1, einen Fahrzeugantrieb gemäß dem Oberbegriff des Anspruchs 6, sowie ein Verfahren zur Regelung/Steuerung eines solchen Fahrzeugantriebs gemäß dem Oberbegriff des Anspruchs 7.

### Stand der Technik

Bei Kraftfahrzeugen mit Hybridantrieb, die gewöhnlich eine Brennkraftmaschine, mindestens eine Elektromaschine und eine in einem Antriebsstrang des Hybridantriebs zwischen der Brennkraftmaschine und der bzw. einer der Elektromaschinen angeordnete Trennkupplung aufweisen, wird von der Motorsteuerung ab und zu eine sogenannte "Tastpunktadaption" durchgeführt, um die durch Kupplungsverschleiß verursachte Verschiebung des Punktes des ersten Kontakts zwischen den Kupplungselementen auszugleichen, d.h. des Punktes, bei dem das übertragene Drehmoment noch Null beträgt. Dabei wird in der Regel bei stehendem Fahrzeug und nicht-eingelegtem Gang in einem ersten Leerlaufzustand die Trennkupplung ganz geöffnet und dann die durch die offene Trennkupplung von der Brennkraftmaschine getrennte Elektromaschine mit Hilfe ihres Leerlaufreglers auf eine konstante Leerlaufdrehzahl gebracht. Anschließend wird die Trennkupplung langsam geschlossen, bis es am Leerlaufregler der Elektromaschine zu einem ersten Drehzahleinbruch kommt, was ein Anzeichen für das Auftreten des ersten Kontakts zwischen den Kupplungselementen ist. Dieser Punkt wird dann als neuer adaptierter Tastpunkt festgelegt. Nach Beendigung der Tastpunktadaption wird die Trennkupplung wieder vollständig geöffnet, wobei der Hybridantrieb einen nachfolgenden zweiten Leerlaufzustand einnimmt.

Beim langsamen Schließen der Kupplung während des Übergangs zwischen den beiden Leerlaufzuständen wird ein Lastmoment auf die Elektromaschine aufgebracht, dessen Betrag von dem als PI-Regler oder PID-Regler ausgebildeten Leerlaufregler der Elektromaschine mittels seines Integrationsgliedes "gelernt" und bei der Leerlaufregelung der Elektromaschine kompensiert wird, üblicherweise über den I-Anteil an dem vom Leerlaufregler zur Elektromaschine übermittelten Soll-Drehmoment. Das auf die Elektromaschine aufgebrachte Lastmoment fällt beim Öffnen der Trennkupplung schlagartig weg, wodurch es am Leerlaufregler der Elektromaschine zu einem Drehzahlüberschwinger kommt, bis das Integrationsglied das Fehlen des Lastmoments erneut "gelernt" hat. Der Überschwinger beeinträchtigt die Regelgüte der Leerlaufregelung und kann zu einem spürbaren Ruck bzw. zu einem hörbaren Anstieg der Leerlaufdrehzahl führen.

Diese Problematik tritt nicht nur bei Hybridfahrzeugen auf, sondern kann auch bei Fahrzeugen mit konventionellem Antrieb und einer automatischen Kupplung auftreten, zum Beispiel bei Fahrzeugen mit automatisiertem Schaltgetriebe (ASG), wenn bei der automatischen Kupplung eine Tastpunktadaption durchgeführt wird.

Bei Hybridfahrzeugen kann eine Beeinträchtigung der Regelgüte der Leerlaufregelung bzw. ein spürbarer Ruck oder hörbarer Anstieg der Leerlaufdrehzahl bei einem Übergang zwischen zwei aufeinanderfolgenden Leerlaufzuständen und somit eine ähnliche Problematik auch dann auftreten, wenn ihr Hybridantrieb aus einem hybridischen Leerlaufbetrieb in einen rein elektrischen Leerlaufbetrieb übergeht. Während im hybridischen Leerlaufbetrieb der Leerlaufregler der Brennkraftmaschine durch Ansteuerung von sowohl der Brennkraftmaschine und der Elektromaschine für die Einhaltung eines gewünschten Soll-Werts der Leerlaufdrehzahl sorgt und daher im folgenden als hybridischer Leerlaufregler bezeichnet wird, wird diese Aufgabe beim Übergang in den rein elektrischen Leerlaufbetrieb vom Leerlaufregler der Elektromaschine übernommen. Da sowohl im hybridischen Leerlaufbetrieb als auch im rein elektrischen Leerlaufbetrieb dasselbe Fahrverhalten dargestellt werden soll, nämlich ein selbständiges langsames Kriechen des Fahrzeugs bei nicht vorhandenem Fahrwunsch bzw. bei unbetätigtem Gaspedal, wird vom Leerlaufregler der Elektromaschine derselbe Soll-Wert wie zuvor vom hybridischen Leerlaufregler eingestellt. Je nach Steigung des Untergrundes führt das selbständige langsame Kriechen des Fahrzeugs allerdings zu einem mehr oder weniger hohen Fahrwiderstand, für dessen Überwindung ein zusätzliches Drehmoment benötigt wird. Dieses zusätzliche Drehmoment wird im hybridischen Leerlaufbetrieb vom hybridischen Leerlaufregler mittels seines Integrationsgliedes "gelernt" und bei der Regelung der Leerlaufdrehzahl durch einen entsprechenden I-Anteil des zur Brennkraftmaschine übermittelten Soll-Drehmoments berücksichtigt. Da jedoch das vom hybridischen Leerlaufregler "gelernte" Drehmoment dem Leerlaufregler der Elektromaschine nicht bekannt ist, kommt es beim Übergang vom hybridischen Leerlaufbetrieb in den rein elektrischen Leerlaufbetrieb zu einer Abweichung des Ist-Werts der Leerlaufdrehzahl vom Soll-Wert, wenn beim Öffnen der Trennkupplung zwischen der Brennkraftmaschine und der Elektromaschine der hybridische Leerlaufregler abgeschaltet und der Leerlaufregler der Elektromaschine eingeschaltet wird. Diese Abweichung wird erst dann kompensiert, wenn der Leerlaufregler der Elektromaschine mittels seines Integrationsgliedes das zur Überwindung des jeweiligen Fahrwiderstands benötigte Drehmoment gelernt hat.

Aus der DE 698 18 194 T2 ist es bei einem Hybridantrieb mit einer Brennkraftmaschine und einer Elektromaschine bereits bekannt, die Elektromaschine in einer Übergangsphase zwischen zwei aufeinanderfolgenden Leerlaufzuständen nicht einer PI-Regelung sondern einer Steuerung zu unterstellen, um einen vom Soll-Wert abweichenden Ist-Wert der Leerlaufdrehzahl ruckfrei wieder auf den Soll-Wert zurückzuführen. Eine Vermeidung der Abweichung des Ist-Werts vom Soll-Wert durch die in der Übergangsphase vorgenommene Steuerung ist bei dem bekannten Hybridantrieb jedoch nicht vorgesehen.

Aus der DE 199 15 207 A1 ist ein Verfahren und eine Vorrichtung zur Ermittlung eines Greifpunktes eines Servokupplung bekannt, wobei die Kupplung zwischen einem Fahrzeugmotor und einem elektrischen Generator angeordnet ist. Die Ermittlung erfolgt dabei in Situationen, wo die Kupplung kein oder nur ein sehr geringes Drehmoment übertragen soll, beispielsweise bei einem Stillstand des Fahrzeugs. Antriebsaggregate, denen jeweils ein Leerlaufregler zugeordnet ist, oder eine Anpassung eines Integrationsglieds des jeweiligen Leerlaufreglers sind jedoch nicht vorgesehen. Die Offenlegungsschrift DE 10 2004 019 301 A1 beschreibt ein Verfahren zur Motorsteuerung sowie eine entsprechende Motorsteuerung. Dabei ist vorgesehen, in Abhängigkeit von der Verbrennungsart einen PI-Regler mit unterschiedlichen Integralteilen zu belegen.

Ausgehend hiervon liegt der Erfindung die Aufgabe zugrunde, die Regelgüte der Leerlaufregelung während eines Übergangs zwischen aufeinanderfolgenden Leerlaufzuständen zu verbessern.

### Offenbarung der Erfindung

Diese Aufgabe wird im Hinblick auf die Steuer/Regelvorrichtung erfindungsgemäß dadurch gelöst, dass beim Übergang ein Steuereingriff erfolgt, um Abweichungen eines Ist-Werts der Leerlaufdrehzahl von einem Soll-Wert zu vermeiden. Das jeweils treibende Antriebsaggregat kann vor und nach dem Übergang dasselbe sein, wie im Fall eines konventionellen Antriebs, der nur ein einziges Antriebsaggregat aufweist, oder im Fall eines Hybridantriebs, an dessen Trennkupplung eine Tastpunktadaption vorgenommen wird. Das jeweils treibende Antriebsaggregat kann jedoch beim Übergang auch gewechselt werden, wie im Fall eines Hybridantriebs, der vom hybridischen Leerlaufbetrieb in den rein elektrischen Leerlaufbetrieb übergeht, oder umgekehrt.

Eine besonders vorteilhafte Ausgestaltung der erfindungsgemäßen Steuer/Regelvorrichtung sieht vor, dass der Steuereingriff eine Neueinstellung bzw. Initialisierung des Leerlaufreglers des nach dem Übergang treibenden Antriebsaggregats umfasst, indem ein gelerntes Lastmoment im Integrationsglied des Leerlaufreglers durch ein gespeichertes Lastmoment oder eine Ausgangsgröße des gesamten Leerlaufreglers durch eine gespeicherte Ausgangsgröße ersetzt wird.

Der Fahrzeugantrieb ist erfindungsgemäß ein Hybridantrieb, der mindestens ein erstes und ein zweites Antriebsaggregat sowie die als Trennkupplung ausgebildete, zwischen den beiden Antriebsaggregaten angeordnete Kupplung umfasst.

Erfindungsgemäß umfasst die Steuer/Regelvorrichtung einen jedem Antriebsaggregat zugeordneten Leerlaufregler mit einem Integrationsglied zur Regelung der Leerlaufdrehzahl des jeweiligen Antriebsaggregats, wobei der Steuereingriff eine Neueinstellung bzw. Initialisierung des Leerlaufreglers des nach dem Übergang treibenden Antriebsaggregats umfasst, wobei ein Lastmoment im Integrationsglied dieses Leerlaufreglers durch ein vor dem Übergang vom Integrationsglied des anderen Leerlaufreglers gelerntes Lastmoment ersetzt wird.

Im Hinblick auf das Verfahren zur Regelung/Steuerung eines Fahrzeugantriebs wird die Aufgabe erfindungsgemäß dadurch gelöst, dass beim Übergang zwischen den beiden Leerlaufzuständen ein Steuereingriff vorgenommen wird, um Abweichungen eines Ist-Werts der Leerlaufdrehzahl von einem Soll-Wert durch einen Steuereingriff am Leerlaufregler zu vermeiden.

Eine zur Anwendung bei einer Tastpunktadaption vorgesehene erfindungsgemäße Ausgestaltung des erfindungsgemäßen Verfahrens sieht vor, dass der Leerlaufregler während des Steuereingriffs beim Übergang initialisiert bzw. neu eingestellt wird, indem ein Lastmoment im Integrationsglied des Leerlaufreglers durch ein anderes Lastmoment ersetzt wird, oder indem eine Ausgangsgröße des Leerlaufreglers durch eine andere Ausgangsgröße ersetzt wird.

Bei dem anderen Lastmoment bzw. der anderen Ausgangsgröße handelt es sich bevorzugt um ein in einem Speicher gespeichertes Lastmoment bzw. um eine um eine in einem Speicher gespeicherte Ausgangsgröße, die bei einer Tastpunktadaption dem Fahrwiderstand vor dem Beginn der Tastpunktadaption entspricht.

Eine weitere erfindungsgemäße Ausgestaltung des erfindungsgemäßen Verfahrens ist zur Anwendung beim Übergang eines Hybridantriebs mit einem ersten und einem zweiten Antriebsaggregat aus einem hybridischen Leerlaufbetrieb in einen rein elektrischen Leerlaufbetrieb, oder umgekehrt, vorgesehen. In diesem Fall wird beim Übergang zwischen den beiden Leerlaufzuständen ein von einem Integrationsglied des Leerlaufreglers des Antriebsaggregats im ersten Leerlaufzustand gelerntes Lastmoment von einem Integrationsglied des Leerlaufreglers des anderen Antriebsaggregats übernommen. Beim Übergang vom hybridischen Leerlaufbetrieb in den rein elektrischen Leerlaufbetrieb bedeutet dies, dass das vom Integrationsglied des hybridischen Leerlaufreglers gelernte Lastmoment vom Integrationsglied des Leerlaufreglers der Elektromaschine übernommen wird.

### Kurze Beschreibung der Zeichnungen

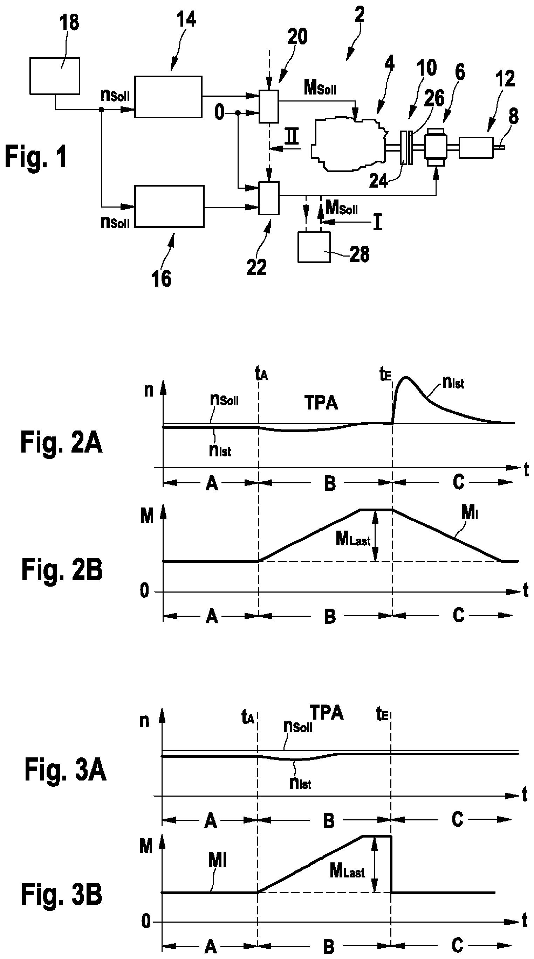

Im folgenden wird die Erfindung anhand zweier in der Zeichnung dargestellter Ausführungsbeispiele näher erläutert. Es zeigen
Fig. 1 eine schematische Ansicht von Teilen eines Hybridantriebs eines Kraftfahrzeugs mit einer Brennkraftmaschine, einer elektrischen Maschine und einer dazwischen angeordneten Trennkupplung;
Fig. 2A und 2B Darstellungen des zeitlichen Verlaufs eines Soll-Werts und eines Ist-Werts der Leerlaufdrehzahl bzw. des Verlaufs eines I-Anteils eines Soll-Drehmoments eines Leerlaufreglers der elektrischen Maschine bei der Durchführung einer Tastpunktadaption der Trennkupplung ohne einen Steuereingriff während eines Übergangs zwischen zwei Leerlaufzuständen;
Fig. 3A und 3B entsprechende Darstellungen des zeitlichen Verlaufs des Soll-Werts und des Ist-Werts der Leerlaufdrehzahl bzw. des I-Anteils des Soll-Drehmoments des Leerlaufreglers der elektrischen Maschine bei der Tastpunktadaption, jedoch mit einem Steuereingriff während des Übergangs zwischen den beiden Leerlaufzuständen;

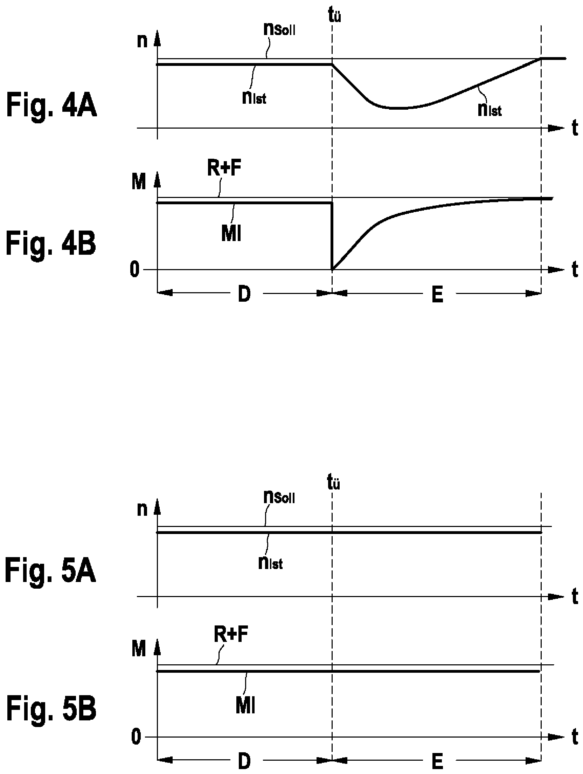

Fig. 4A und 4B Darstellungen des zeitlichen Verlaufs eines Soll-Werts und eines Ist-Werts der Leerlaufdrehzahl bzw. eines I-Anteils eines Soll-Drehmoments eines hybridischen Leerlaufreglers und eines Leerlaufreglers der elektrischen Maschine bei einem Übergang von einem hybridischen Leerlaufbetrieb in einen rein elektrischen Leerlaufbetrieb ohne einen Steuereingriff während des Übergangs;
Fig. 5A und 5B entsprechende Darstellungen des zeitlichen Verlaufs des Soll-Werts und des Ist-Werts der Leerlaufdrehzahl sowie des I-Anteils des Soll-Drehmoments des hybridischen Leerlaufreglers und des Leerlaufreglers der elektrischen Maschine beim Übergang vom hybridischen Leerlaufbetrieb in den rein elektrischen Leerlaufbetrieb, jedoch mit einem Steuereingriff während des Übergangs.

### Ausführungsformen der Erfindung

Der in der Zeichnung nur teilweise und schematisch dargestellte Hybridantrieb 2 eines Kraftfahrzeugs umfasst in bekannter Weise eine Brennkraftmaschine 4, eine elektrische Maschine 6, eine zwischen der Brennkraftmaschine 4 und der elektrischen Maschine 6 in einem Antriebsstrang 8 des Hybridantriebs 2 angeordnete Trennkupplung 10, sowie ggf. ein hinter der elektrischen Maschine 6 im Antriebsstrang 8 angeordnetes Getriebe 12.

Eine Steuer/Regelvorrichtung für den Hybridantrieb 2 umfasst zwei Leerlaufregler 14, 16, von denen einer 14 der Brennkraftmaschine 4 und der andere der elektrischen Maschine 6 zugeordnet ist. Während im rein elektrischen Leerlaufbetrieb, d.h. bei geöffneter Trennkupplung 10, die Leerlaufdrehzahl allein mit dem Leerlaufregler 16 der elektrischen Maschine geregelt wird, kann im hybridischen Leerlaufbetrieb, d.h. bei geschlossener Trennkupplung 10, die Leerlaufdrehzahl mittels des Leerlaufreglers 14 der Brennkraftmaschine 4, mittels des Leerlaufreglers 16 der Elektromaschine 6 oder anteilig mittels der beiden Leerlaufregler 14 und 16 gemeinsam geregelt werden. Im folgenden wird daher der Begriff hybridischer Leerlaufregler verwendet, der beispielhaft durch den Leerlaufregler 14 verkörpert wird.

Mit Hilfe der beiden derart ausgebildeten Leerlaufregler 14, 16 wird ein Soll-Drehmoment M_{Soll} der Brennkraftmaschine 4 bzw. M_{Soll} der elektrischen Maschine 6 bei einer Abweichung eines Ist-Werts n_{Ist} der Leerlaufdrehzahl der Brennkraftmaschine 4 bzw. der elektrischen Maschine 6 von einem von einer Steuerung 18 vorgegebenen Soll-Wert n_{Soll} der Leerlaufdrehzahl verändert, um den Ist-Wert n_{Ist} wieder an den Soll-Wert n_{Soll} heranzuführen. Die beiden Leerlaufregler 14, 16 sind als PI- oder PID-Regler ausgebildet und umfassen jeweils ein Integrationsglied 20 bzw. 22.

An der Trennkupplung 10 des Hybridantriebs 2 wird gelegentlich eine Tastpunktadaption TPA durchgeführt, um die durch einen Verschleiß der Kupplung 10 verursachte Verschiebung des Punktes des ersten Kontakts zwischen einem mit der Brennkraftmaschine 4 verbundenen Kupplungselement 24 und einem mit der elektrischen Maschine 6 verbundenen Kupplungselement 26 auszugleichen. Dazu wird die Trennkupplung 10 bei stehendem Fahrzeug und nicht-eingelegtem Gang geöffnet und dann der Ist-Wert n_{Ist} der Leerlaufdrehzahl der elektrischen Maschine 6 mittels ihres Leerlaufreglers 16 auf den Soll-Wert n_{Soll} gebracht. Erst wenn die Leerlaufdrehzahl der elektrischen Maschine 6 eingeschwungen ist, d.h. wenn der Ist-Wert n_{Ist} der Leerlaufdrehzahl dem Soll-Wert n_{Soll} entspricht, wie im Abschnitt A in Fig. 2A und 3A dargestellt, und sämtliche Widerstände, wie Reibung und Fahrwiderstand, in dem vom Integrationsglied 22 ausgegebenen Soll-Drehmoment M_{Soll} berücksichtigt sind, wird die Tastpunktadaption TPA im Zeitpunkt t_{A} gestartet. Während der Tastpunktadaption TPA wird die Trennkupplung 10 langsam geschlossen und der erste Drehzahleinbruch abgewartet, der durch eine Abweichung des Ist-Werts n_{Ist} der Leerlaufdrehzahl vom Soll-Wert n_{Soll} erkennbar ist, wie im Abschnitt B in Fig. 2A und 3A dargestellt. Dieser Punkt wird dann als neuer Tastpunkt eingestellt. Nach Beendigung der Tastpunktadaption wird die Trennkupplung 10 im Zeitpunkt t_{E} wieder ganz geöffnet, wobei dieser Öffnungsvorgang sehr schnell abläuft.

Während der Tastpunktadaption TPA wird über die sich langsam schließende Kupplung 10 ein Lastmoment M_{Last} auf die elektrische Maschine 6 aufgebracht, das während des Schließens der Kupplung 10 auf ein Maximum ansteigt und beim plötzlichen Öffnen der Kupplung 10 schlagartig abfällt.

Wenn die Leerlaufdrehzahl während der Tastpunktadaption TPA, d.h. während des Übergangs zwischen den beiden Öffnungszuständen der Kupplung 10, wie bisher üblich, durchgehend mit Hilfe des Leerlaufreglers 16, 22 geregelt wird, wird dieses Lastmoment M_{Last} durchgehend vom Leerlaufregler 16, 22 kompensiert, üblicherweise durch das "gelernte" Moment des Integrationsgliedes 22, d.h. den I-Anteil des vom Leerlaufregler 16, 22 zur Elektromaschine 6 zugeführten Soll-Drehmoments M_{Soll}, wie in Fig. 2B und 3B durch durchgezogene Linie MI dargestellt. Beim plötzlichen Öffnen der Trennkupplung 10 nach Beendigung der Tastpunktadaption kann jedoch das Integrationsglied 22 des Leerlaufreglers 16, 22 dem schlagartigen Abfall nur allmählich folgen, wie durch die schräge Flanke der Kurve MI im Abschnitt C in Fig. 2B dargestellt. Dies führt zu einem Drehzahlüberschwinger am Leerlaufregler 16, 22, d.h. einem steilen Anstieg und dann einem allmählichen Abfall des Ist-Werts n_{Ist} der Leerlaufdrehzahl, wie in Fig. 2A im Abschnitt C dargestellt, deren Soll-Wert n_{Soll} erst wieder erreicht wird, wenn die schräge Flanke der Kurve MI im Abschnitt C in Fig. 2B denselben Wert annimmt, wie vor der Tastpunktadaption TPA, d.h. den Wert im Abschnitt A.

Um diesen Drehzahlüberschwinger zu vermeiden, wird das "gelernte" Moment des Integrationsgliedes 22, d.h. der I-Anteil MI des vom Leerlaufregler 16, 22 zur Elektromaschine 5 zugeführten Soll-Drehmoments M_{Soll}, vor Beginn der Tastpunktadaption TPA in einem Speicher 28 gespeichert. Nach Beendigung der Tastpunktadaption TPA und im Augenblick des Öffnens der Trennkupplung 10, d.h. im Zeitpunkt t_{E}, wird das "gelernte" Moment des Integrationsgliedes 22 durch das gespeicherte Moment aus dem Speicher 28 ersetzt, wie bei I in Fig. angezeigt. Da dieses Moment denselben Wert wie der I-Anteil MI vor der Tastpunktadaption aufweist, gibt es keinen Drehzahlüberschwinger am Leerlaufregler 16, 22 und damit keine Abweichung von n_{Ist} und n_{Soll}, wie im Abschnitt C in Fig. 3a dargestellt.

Während eines Übergangs von einem hybridischen Leerlaufbetrieb in einen elektrischen Leerlaufbetrieb durch Öffnen der Trennkupplung 10 oder während eines Übergangs von einem rein elektrischen Leerlaufbetrieb in einen hybridischen Leerlaufbetrieb durch Schließen der Trennkupplung 10 kann bei dem Hybridantrieb aus Fig. 1 ein ähnlicher Steuereingriff vorgenommen werden, wie nachfolgend für den Übergang vom hybridischen Leerlaufbetrieb in den rein elektrischen Leerlaufbetrieb beschrieben wird.

Wenn bei diesem Übergang zum Zeitpunkt t_{Ü} der hybridische Leerlaufregler 14, 20 abgeschaltet und der Leerlaufregler 16, 22 der elektrischen Maschine 6 eingeschaltet wird, wird das zuvor vom Integrationsglied 20 des Leerlaufreglers 14 "gelernte" Moment M, das neben der Reibung R auch den zum Beispiel von der Steigung abhängigen Fahrwiderstand F, d.h. R + F, berücksichtigt, an das Integrationsglied 22 des Leerlaufreglers 16, 22 übergeben, wie bei II in Fig. 1 dargestellt.

Während es mit der bisher üblichen Regelstrategie ohne einen Steuereingriff beim Übergang vom hybridischen in den rein elektrischen Leerlaufbetrieb beim Umschalten im Zeitpunkt t_{Ü} zu einem Absinken des Wertes MI und damit zu einer Abweichung des Ist-Werts n_{Ist} der Leerlaufdrehzahl vom Soll-Wert n_{Soll} kommt, wie im Abschnitt D in Fig. 4A dargestellt, kann eine solche Abweichung durch den Steuereingriff vermieden werden, weil in diesem Fall das Startmoment des Integrationsgliedes 22 des Leerlaufreglers 16, 22 dem letzten vom Integrationsglied 20 des Leerlaufreglers 14, 20 "gelernten" Moment entspricht. Es ist daher nach dem Zeitpunkt t_{Ü} keine Abweichung zwischen dem Ist-Wert n_{Ist} und dem Soll-Wert n_{Soll} der Leerlaufdrehzahl feststellbar, wie in Fig. 5 dargestellt.

## Patentansprüche

1. Steuer/Regelvorrichtung für einen Fahrzeugantrieb, insbesondere einen Hybridantrieb, der mindestens ein Antriebsaggregat und eine in einem Antriebsstrang des Fahrzeugantriebs angeordnete automatische Kupplung aufweist, die bei einem Übergang zwischen zwei aufeinanderfolgenden Leerlaufzuständen öffnet oder schließt, umfassend mindestens einen Leerlaufregler mit einem Integrationsglied zur Regelung einer Leerlaufdrehzahl des Antriebsaggregats, **dadurch gekennzeichnet, dass** beim Übergang (B; t_{Ü}) ein Steuereingriff erfolgt, um Abweichungen eines Ist-Werts (n_{Ist}) der Leerlaufdrehzahl von einem Soll-Wert (n_{Soll}) zu vermeiden, wobei der Antrieb ein Hybridantrieb (2) ist, der mindestens ein erstes und ein zweites Antriebsaggregat (4, 6) und die zwischen den beiden Antriebsaggregaten (4, 6) angeordnete, als Trennkupplung (10) ausgebildete Kupplung umfasst, und dass die Steuer/Regelvorrichtung zwei Leerlaufregler (16, 22) umfasst, und dass der Steuereingriff eine Neueinstellung bzw. Initialisierung des Leerlaufreglers (16, 22) des mindestens einen nach dem Übergang (t_{Ü}) treibenden Antriebsaggregats (6) umfasst, wobei die Neueinstellung bzw. Initialisierung ein Ersetzen eines Lastmoments im Integrationsglied (22) dieses Leerlaufreglers (16, 22) durch ein Lastmoment umfasst, das vor dem Übergang vom Integrationsglied (20) des anderen Leerlaufreglers (14, 20) des mindestens einen vor dem Übergang (t_{Ü}) treibenden Antriebsaggregats (4) gelernt worden ist.

2. Steuer/Regelvorrichtung nach Anspruch 1, **dadurch gekennzeichnet, dass** der Steuereingriff eine Neueinstellung bzw. Initialisierung des Leerlaufreglers (16, 22) umfasst.

3. Steuer/Regelvorrichtung nach Anspruch 2, **dadurch gekennzeichnet, dass** die Neueinstellung bzw. Initialisierung des Leerlaufreglers (16, 22) ein Ersetzen eines gelernten Lastmoments im Integrationsglied (22) des Leerlaufreglers (16, 22) durch ein anderes Lastmoment oder ein Ersetzen einer Ausgangsgröße des Leerlaufreglers (16, 22) durch eine andere Ausgangsgröße einschließt.

4. Fahrzeugantrieb, insbesondere einen Hybridantrieb, **gekennzeichnet durch** eine Steuer/Regelvorrichtung nach einem der vorangehenden Ansprüche.

5. Verfahren zur Regelung/Steuerung eines Fahrzeugantriebs, insbesondere eines Hybridantriebs mit mindestens einem Antriebsaggregat, dessen Leerlaufdrehzahl von einem Leerlaufregler mit einem Integrationsglied geregelt wird, sowie mit einer in einem Antriebsstrang des Fahrzeugantriebs angeordneten automatischen Kupplung, die während eines Übergangs zwischen zwei aufeinanderfolgenden Leerlaufzuständen öffnet oder schließt, **dadurch gekennzeichnet, dass** die Regelung der Leerlaufdrehzahl des mindestens einen treibenden Antriebsaggregats (4, 6) während des Übergangs (B; tü) zwischen den beiden Leerlaufzuständen (A, C; D, E) einen Steuereingriff umfasst, um Abweichungen eines Ist-Werts (n_{Ist}) der Leerlaufdrehzahl von einem Soll-Wert (n_{Soll}) zu vermeiden, wobei die als Trennkupplung (10) eines Hybridantriebs (2) mit einem ersten und einem zweiten Antriebsaggregat (4, 6) ausgebildete Kupplung bei einem Übergang von einem hybridischen Leerlaufbetrieb in einen rein elektrischen Leerlaufbetrieb geöffnet oder bei einem Übergang von einem rein elektrischen Leerlaufbetrieb in einen hybridischen Leerlaufbetrieb geschlossen wird, und wobei der Leerlaufregler (16, 22) des nach dem Übergang (B; t_{Ü}) treibenden Antriebsaggregats (6) beim Übergang (B; tü) neu eingestellt bzw. initialisiert wird, indem ein Lastmoment in seinem Integrationsglied (22) durch ein Lastmoment, das vor dem Übergang vom Integrationsglied (20) eines anderen Leerlaufreglers (14,20) des mindestens einen vor dem Übergang (t_{Ü}) treibenden Antriebsaggregates (4) gelernt worden ist, ersetzt wird.

6. Verfahren nach Anspruch 5, **dadurch gekennzeichnet, dass** die automatische Kupplung (10) bei einer Tastpunktadaption (TPA) zwischen zwei aufeinanderfolgenden Leerlaufzuständen (A, C) geöffnet, nahezu geschlossen und erneut geöffnet wird, und dass ein während des Schließens der Kupplung (10) vom Integrationsglied (22) des Leerlaufreglers (16, 22) gelerntes Lastmoment bzw. eine diesem Lastmoment entsprechende Ausgangsgröße des Leerlaufreglers (16, 22) während des erneuten Öffnens der Kupplung (10) durch ein gespeichertes, vor dem Beginn der Tastpunktadaption (TPA) vom Integrationsglied (22) des Leerlaufreglers (16, 22) gelerntes Lastmoment bzw. eine diesem Lastmoment entsprechende Ausgangsgröße des Leerlaufreglers (16, 22) ersetzt wird.

## Claims

1. Open-loop/closed-loop control apparatus for a vehicle drive, in particular a hybrid drive, which has at least one drive assembly and one automatic clutch which is arranged in a drive train of the vehicle drive and opens or closes when a changeover is made between two successive idle states, comprising at least one idle controller with an integration element for controlling an idle speed of the drive assembly, **characterized in that**, when a changeover (B; t_{c}) is made, a control intervention is performed in order to prevent deviations in an actual value (n_{act}) of the idle speed from a setpoint value (nₛₑₜ), wherein the drive is a hybrid drive (2) which comprises at least one first and one second drive assembly (4, 6) and the clutch which is arranged between the two drive assemblies (4, 6) and is in the form of a separate clutch (10), and **in that** the open-loop/closed-loop control apparatus comprises two idle controllers (16, 22), and **in that** the control intervention comprises resetting or initializing the idle controller (16, 22) of the at least one drive assembly (6) which provides driving after the changeover (t_{c}), wherein the resetting or initialization comprises replacing a load moment in the integration element (22) of this idle controller (16, 22) with a load moment which had been learnt, before the changeover, by the integration element (20) of the other idle controller (14, 20) of the at least one drive assembly (4) which provided driving before the changeover (t_{c}).

2. Open-loop/closed-loop control apparatus according to Claim 1, **characterized in that** the control intervention comprises resetting or initializing the idle controller (16, 22).

3. Open-loop/closed-loop control apparatus according to Claim 2, **characterized in that** resetting or initializing the idle controller (16, 22) includes replacing a learnt load moment in the integration element (22) of the idle controller (16, 22) with another load moment or replacing an output variable of the idle controller (16, 22) with another output variable.

4. Vehicle drive, in particular a hybrid drive, **characterized by** an open-loop/closed-loop control apparatus according to one of the preceding claims.

5. Method for open-loop/closed-loop control of a vehicle drive, in particular a hybrid drive, comprising at least one drive assembly of which the idle speed is controlled by an idle controller with an integration element, and also comprising an automatic clutch which is arranged in a drive train of the vehicle drive and opens or closes during a changeover between two successive idle states, **characterized in that** control of the idle speed of the at least one drive assembly (4, 6), which provides driving, during the changeover (B; t_{c}) between the two idle states (A, C; D, E) comprises a control intervention in order to prevent deviations in an actual value (n_{act}) of the idle speed from a setpoint value (nₛₑₜ), wherein the clutch which is in the form of a separate clutch (10) of a hybrid drive (2) comprising a first and a second drive assembly (4, 6) is opened when a changeover is made from a hybrid idle mode to a purely electric idle mode or is closed when a changeover is made from a purely electric idle mode to a hybrid idle mode, and wherein the idle controller (16, 22) of the drive assembly (6) which provides driving after the changeover (B; t_{c}) is reset or initialized, when the changeover (B; t_{c}) is made, by a load moment in the integration element (22) of the said idle controller being replaced by a load moment which had been learnt, before the changeover, by the integration element (20) of another idle controller (14, 20) of the at least one drive assembly (4) which provided driving before the changeover (t_{c}).

6. Method according to Claim 5, **characterized in that** the automatic clutch (10) is open, almost closed and reopened in the event of bite point adjustment (BPA) between two successive idle states (A, C), and **in that** a load moment which is learnt, during closing of the clutch (10), by the integration element (22) of the idle controller (16, 22) or an output variable of the idle controller (16, 22), which output variable corresponds to this load moment, during reopening of the clutch (10) is replaced by a stored load moment which is learnt, before the beginning of the bite point adjustment (BPA), by the integration element (22) of the idle controller (16, 22) or an output variable of the idle controller (16, 22), which output variable corresponds to this load moment.

## Revendications

1. Dispositif de commande/régulation pour un système propulseur de véhicule, notamment un système propulseur hybride qui présente au moins un groupe propulseur et un embrayage automatique disposé dans une chaîne de transmission du système propulseur de véhicule, lequel s'ouvre et se ferme lors d'une transition entre deux états de ralenti successifs, comprenant au moins un régulateur de ralenti ayant un élément d'intégration pour réguler un régime de ralenti du groupe propulseur, **caractérisé en ce qu'**un accès de commande a lieu lors de la transition (B ; t_{Ü}) pour éviter des écarts entre une valeur réelle (n_{Ist}) du régime de ralenti et une valeur de consigne (nₛₒₗₗ), dans lequel le système propulseur est un système propulseur hybride (2) qui comprend au moins un premier et un deuxième groupes propulseurs (4, 6) et l'embrayage disposé entre les deux groupe propulseur (4, 6), réalisé en tant qu'embrayage de séparation (10), et **en ce que** le dispositif de commande/régulation comprend deux régulateurs de ralenti (16, 22) et **en ce que** l'accès de commande comprend un nouveau réglage ou une initialisation du régulateur de ralenti (16, 22) de l'au moins un groupe propulseur (6) fonctionnant après la transition (t_{Ü}), dans lequel le nouveau réglage ou l'initialisation comprend un remplacement d'un couple de charge dans l'élément d'intégration (22) dudit régulateur de ralenti (16, 22) par un couple de charge qui a été appris avant la transition par l'élément d'intégration (20) de l'autre régulateur de ralenti (14, 20) de l'au moins un groupe propulseur (4) agissant avant la transition (t_{Ü}).

2. Dispositif de commande/régulation selon la revendication 1, **caractérisé en ce que** l'accès de commande comprend un nouveau réglage ou une initialisation du régulateur de ralenti (16, 22).

3. Dispositif de commande/régulation selon la revendication 2, **caractérisé en ce que** le nouveau réglage ou l'initialisation du régulateur de ralenti (16, 22) inclut un remplacement d'un couple de charge appris dans l'élément d'intégration (22) du régulateur de ralenti (16, 22) par un autre couple de charge, ou un remplacement d'une grandeur de sortie du régulateur de ralenti (16, 22) par une autre grandeur de sortie.

4. Système propulseur de véhicule, notamment un système propulseur hybride, **caractérisé par** un dispositif de commande/régulation selon l'une quelconque des revendications précédentes.

5. Procédé de régulation/commande d'un système propulseur de véhicule, notamment d'un système propulseur hybride comprenant au moins un groupe propulseur dont le régime de ralenti est régulé par un régulateur de ralenti comportant un élément d'intégration, et comprenant également un embrayage automatique disposé dans une chaîne de transmission du système propulseur de véhicule, lequel s'ouvre ou se ferme lors d'une transition entre deux états de ralenti successifs, **caractérisé en ce que** la régulation du régime de ralenti de l'au moins un groupe propulseur moteur (4, 6), lors de la transition (B ; t_{Ü}) entre les deux états de ralenti (A, C ; D, E) comprend un accès de commande pour éviter des écarts entre une valeur réelle (nist) du régime de ralenti et une valeur de consigne (nₛₒₗₗ), dans lequel l'embrayage réalisé sous la forme d'un embrayage de séparation (10) d'un système propulseur hybride (2) comportant des premier et second groupes propulseurs (4, 6) s'ouvre lors d'une transition d'un régime de ralenti hybride à un régime de ralenti purement électrique ou se ferme lors d'une transition d'un régime de ralenti purement électrique à un régime de ralenti hybride, et dans lequel le régulateur de ralenti (16, 22) du groupe propulseur (6) agissant après la transition (B ; t_{Ü}) est de nouveau réglé ou est initialisé lors de la transition (B ; t_{Ü}) en faisant en sorte qu'un couple de charge agissant dans son élément d'intégration (22) soit remplacé par un couple de charge qui a été appris avant la transition par l'élément d'intégration (20) d'un autre régulateur de ralenti (14, 20) de l'au moins un groupe propulseur (4) agissant avant la transition (t_{Ü}).

6. Procédé selon la revendication 5, **caractérisé en ce que** l'embrayage automatique (10) s'ouvre lors d'une adaptation d'un point d'activation (TPA) entre deux états de régime de ralenti (A, C) consécutifs, **en ce qu'**il est pratiquement fermé et est de nouveau ouvert, et **en ce qu'**un couple de charge appris lors de la fermeture de l'embrayage (10) par le circuit d'intégration (22) du régulateur de ralenti (16, 22) ou une grandeur de sortie du régulateur de ralenti (16, 22) correspondant audit couple de charge est remplacé, pendant l'ouverture renouvelée de l'embrayage (10), par un couple de charge stocké, appris avant le début de l'adaptation du point d'activation (TPA) par l'élément d'intégration (22) du régulateur de ralenti (16, 22) ou par une grandeur de sortie du régulateur de ralenti (16, 22) correspondant audit couple de charge.
